# EUROPÄISCHE PATENTSCHRIFT

(11) **EP 3 536 450 B1**
(45) Veröffentlichungstag und Bekanntmachung des Hinweises auf die Patenterteilung: **19.07.2023**
(21) Anmeldenummer: 19153242.3
(22) Anmeldetag: 23.01.2019
(51) Int. Cl.: B23Q 17/09, G01B 11/24, G01B 21/04, G01B 21/20, G01B 5/20, G01B 11/25

(54) **VORRICHTUNG ZUR EINSTELLUNG UND/ODER VERMESSUNG EINES WERKZEUGS**
DEVICE FOR MEASUREMENT AND/OR CONFIGURATION OF A TOOL
DISPOSITIF DE RÉGLAGE ET/OU DE MESURE D'UN OUTIL

(30) Priorität: 09.03.2018 DE 102018105515
(43) Veröffentlichungstag der Anmeldung: 11.09.2019
(73) Patentinhaber: Haimer GmbH, 86568 Igenhausen (DE)
(72) Erfinder: Haimer, Franz, 86568 Igenhausen (DE); Haimer, Franz-Josef, 86568 Igenhausen (DE)
(74) Vertreter: Charrier Rapp & Liebau

(56) Entgegenhaltungen:
- WO-A1-2015/036486
- DE-A1-102006 036 377
- DE-B3-102004 044 348
- US-A- 6 115 927
- US-B1- 7 307 737

## Beschreibung

Die Erfindung betrifft eine Vorrichtung zur Einstellung und/oder Vermessung eines Werkzeugs nach dem Oberbegriff des Anspruchs 1 sowie ein entsprechendes Verfahren nach Anspruch 11.

Derartige Vorrichtungen werden z.B. zur Werkzeugvoreinstellung eingesetzt. Sie enthalten in der Regel eine Messoptik, über welche die Position der Schneiden oder Schneidflächen eines in einem Werkzeughalter gespannten Werkzeugs erfasst werden kann. Die so ermittelte Schneidenposition kann dann an eine Steuerung einer Werkzeugmaschine zur Bearbeitung übermittelt werden.

Aus der DE 10 2013 218 411 A1 ist eine gattungsgemäße Vorrichtung zur Einstellung und/oder Vermessung eines Werkzeugs bekannt. Diese enthält einen in zwei zueinander rechtwinkligen Achsen verschiebbaren Messelementträger, an dem eine Messeinrichtung zur optischen Vermessung des Werkzeugs angeordnet ist. Der im Wesentlichen U-förmige Messelementträger weist an einem Schenkel eine Lichtquelle und an dem gegenüberliegenden Schenkel eine Kamera oder einen anderen geeigneten Lichtaufnehmer auf. Durch eine derartige Vorrichtung können Werkzeuge mit einer klar definierten Schneide oder Schneidkante sehr genau vermessen und voreingestellt werden. Meist erfolgt eine Vermessung dabei softwareunterstützt an einem, der Einstell- und /oder Messvorrichtung zugeordneten, Monitor. Bei der Vermessung von Werkzeugen mit einer planen Schneidfläche, wie z.B. Schleifscheiben, kann sich jedoch das Problem ergeben, dass die Schneidfläche keine ausgeprägte Kante im Fokusbereich der Messoptik besitzt. Es fehlt eine definierte Bezugskante, an der die Messoptik ausgerichtet oder fokussiert werden kann. Dies betrifft sowohl Geräte, bei denen die Messoptik durch einen Bediener manuell ausgerichtet wird, als auch Geräte, die automatisiert sind und mit einer Bildverarbeitung arbeiten. Es tritt somit eine Messungenauigkeit von bis zu mehreren 1/100 mm auf. Aus der DE 10 2006 036377 A1 ist eine weitere Vorrichtung zur Vermessung eines Werkzeugs bekannt, welche ein schwenkbares Tastmittel sowie eine Kamera aufweist.

Aufgabe der Erfindung ist es, eine Vorrichtung zur Einstellung und/oder Vermessung eines Werkzeugs der eingangs genannten Art zu schaffen, die eine genaue Einstellung und Vermessung auch unterschiedlich gestalteter Werkzeuge ermöglicht. Idealerweise wird die Messungenauigkeit auf weniger als 1/100 mm reduziert.

Diese Aufgabe wird durch eine Vorrichtung zur Einstellung und/oder Vermessung mit den Merkmalen des Anspruchs 1 sowie ein entsprechendes Verfahren gemäß Anspruch 11 gelöst. Zweckmäßige Ausgestaltungen und vorteilhafte Weiterbildungen der Erfindung sind in den Unteransprüchen angegeben.

Die erfindungsgemäße Vorrichtung zur Einstellung und/oder Vermessung eines Werkzeugs enthält einen in mehreren Achsen beweglichen Messelementträger, an dem eine Messeinrichtung zur optischen Vermessung des Werkzeugs angeordnet ist. Dem Messelementträger ist ferner ein zwischen einer Bereitschaftsstellung und einer Messstellung am Werkzeug beweglicher Referenzkörper zur Zusammenwirkung mit der Messeinrichtung zugeordnet. Durch den in eine Messstellung am Werkzeug bewegbaren Referenzkörper kann einem Lichtstrahl eine klar definierte und ausgeprägte Kante geboten werden, die durch eine Optik auch genau fokussiert und z.B. zur Bestimmung einer exakten Position auch verwendet werden kann. Eine Messoptik kann so genau auf den Referenzkörper ausgerichtet und fokussiert werden. Im Gegensatz zu nicht definierten Flächen ist der Referenzkörper durch die Optik klar erkennbar und kann somit den Messvorgang entscheidend erleichtern.

Erfindungsgemäß ist der Referenzkörper am Messelementträger beweglich angeordnet. Durch Verfahren des Messelementträgers kann der Referenzkörper so z.B. an eine zu messende Fläche angelegt werden.

In einer möglichen Ausführung kann der Referenzkörper z.B. an einem freien Ende eines schwenkbaren Arms angeordnet sein. Der Arm kann an dem in mehreren Achsen beweglichen Messelementträger schwenkbar angelenkt sein. Der Referenzkörper kann aber auch zwischen einer zurückgezogenen Bereitschaftsstellung und einer ausgezogenen Messstellung verschiebbar an dem Messelementträger angeordnet sein. Der Referenzkörper ist zur einfacheren Anpassung gegenüber unterschiedlich orientierten Flächen auch gelenkig am Arm befestigt.

In einer besonders vorteilhaften Ausführung kann der Referenzkörper exzentrisch an dem Arm gelagert und durch ein Griffstück verstellbar sein.

Der Arm kann über eine Haltevorrichtung schwenkbar am Messelementträger angeordnet sein. Die Haltevorrichtung kann durch eine Einstelleinrichtung justierbar sein. Außerdem kann der Arm zweckmäßigerweise eine Federung enthalten, die vorzugsweise mit einer im Arm angeordneten Stellvorrichtung zusammenwirkt

Um die Anwenderfreundlichkeit zu verbessern, kann eine Anzeigevorrichtung zur Signalisierung eines Kontakts zwischen dem Referenzkörper und dem Werkzeug vorgesehen sein. Über eine Leuchtdiode oder ein anderes Anzeigeelement kann z.B. signalisiert werden, wenn der Referenzkörper zur Anlage an dem Werkzeug kommt. Eine derartige Anzeigevorrichtung ist auch sinnvoll, wenn eine automatisierte Messung erfolgt und der Referenzkörper automatisch an das Werkzeug herangefahren wird. In einer automatisierten Ausführungsform kann eine Signalausgabe auch in digitaler Form zwischen Mess- und Ausgabegerät erfolgen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein schematische Darstellung einer Vorrichtung zur Einstellung und/oder Vermessung in einer Perspektive;
- **Figur 2**: eine Detailansicht eines Messelementträgers mit einem Referenzkörper in einer Messstellung;
- **Figur 3**: eine Detailansicht eines am Messelementträger angeordneten Arms mit einem Referenzkörper;
- **Figur 4**: eine Detailansicht eines Messelementträgers mit einem Referenzkörper in einer hochgeklappten Bereitschaftsstellung;
- **Figur 5**: eine Detailansicht eines Messelementträgers mit einem Referenzkörper in einer weiteren Messstellung und
- **Figur 6**: eine Schnittansicht einer Haltevorrichtung.

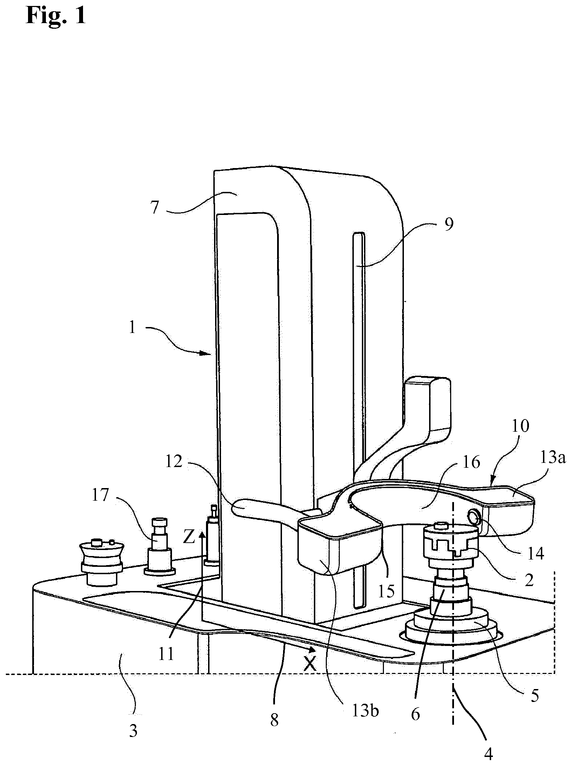

Die in Figur 1 schematisch dargestellte Vorrichtung 1 zur Einstellung und/oder Vermessung eines Werkzeugs 2 enthält ein Gestell bzw. Unterteil 3, an dem eine um eine Mittelachse 4 drehbare Aufnahme 5 zur Halterung des Werkzeugs 2 angeordnet ist. Bei dem gezeigten Ausführungsbeispiel ist in die Aufnahme 5 ein Werkzeughalter 6 mit dem Werkzeug 2 eingesetzt. Die Aufnahme 5 ist derart angeordnet, dass die Mittelachse 4 der Aufnahme 5 und damit auch die Mittelachse des Werkzeughalters 6 vertikal ausgerichtet sind.

Auf dem Gestell bzw. Unterteil 3 ist ein vertikaler Ständer 7 in einer zur Mittelachse 4 der Aufnahme 5 senkrechten ersten Achse 8 (X-Achse) verfahrbar geführt. An einer Führung 9 des in der ersten Achse 8 (X-Achse) verfahrbaren Ständers 7 ist ein Messelementträger 10 in einer zur ersten Achse 8 rechtwinkligen zweiten Achse 11 (Z-Achse) beweglich angeordnet. Der Messelementträger 10 ist somit in einer zur Mittelachse 4 der Aufnahme 5 parallelen Achse (Z-Achse) vertikal und einer dazu senkrechten weiteren Achse (X-Achse) horizontal verfahrbar. Die Verschiebung des Ständers 7 auf dem Gestell bzw. Unterteil 3 und die Verschiebung des Messelementträgers 10 am Ständer 7 kann in an sich bekannter Weise durch Motoren, über Verstellspindeln oder andere geeignete Antriebe erfolgen. Die Verstellung des Ständers 7 und des Messelementträgers 10 kann aber auch manuell über einen Handgriff 12 erfolgen.

Der in den beiden Achsen 8 und 11 horizontal und vertikal verschiebbare Messelementträger 10 ist im Wesentlichen klammer- oder U-förmig ausgebildet und enthält zwei das Werkzeug 2 umgreifende Arme 13a und 13b, die in einer zur Mittelachse 4 der Aufnahme 5 rechtwinkligen Ebene liegen. An dem Messelementträger 10 ist eine Messeinrichtung mit einem ersten Messelement 14 und einem gegenüberliegenden zweiten Messelement 15 angeordnet. Bei der gezeigten Ausführung ist an der Innenseite des einen Arms 13a ein als Lichtquelle ausgebildetes erstes Messelement 14 und an der Innenseite des anderen Arms 13b ein der Lichtquelle gegenüberliegender Lichtempfänger als zweites Messelement 15 angeordnet. Von dem als Lichtquelle ausgebildeten ersten Messelement 14 an dem einen Arm 13a kann dann ein Messstrahl zu dem als Lichtempfänger ausgebildeten zweiten Messelement 15 an dem anderen Arm 13b geleitet werden.

Der Messelementträger 10 weist zwischen den beiden Armen 13a und 13b einen in der Draufsicht U-förmigen Zwischenraum 16 zur Aufnahme des zu vermessenden Werkzeugs 2 auf. Das als Lichtquelle ausgebildete erste Messelement 14 und das als Lichtempfänger ausgebildete zweite Messelement 15 sind derart angeordnet, dass der Messstrahl innerhalb des Zwischenraums 16 zwischen den beiden freien Enden der Arme 13a und 13b des Messelementträgers 10 verläuft. Dadurch kann der vom ersten Messelement 14 zum zweiten Messelement 15 führende Messstrahl auch über eine größere Fläche eines Werkzeugs geführt werden. Das zur Aufnahme des Messstrahls dienende zweite Messelement 15 kann auch eine Kamera sein, die Bildaufnahmen des Werkzeugs machen und an eine Steuereinrichtung und/oder einen Computer zur Auswertung weiterleiten kann. Auf dem Gestell bzw. Unterteil 3 kann ferner ein Werkzeugreservoir 17 vorgesehen sein.

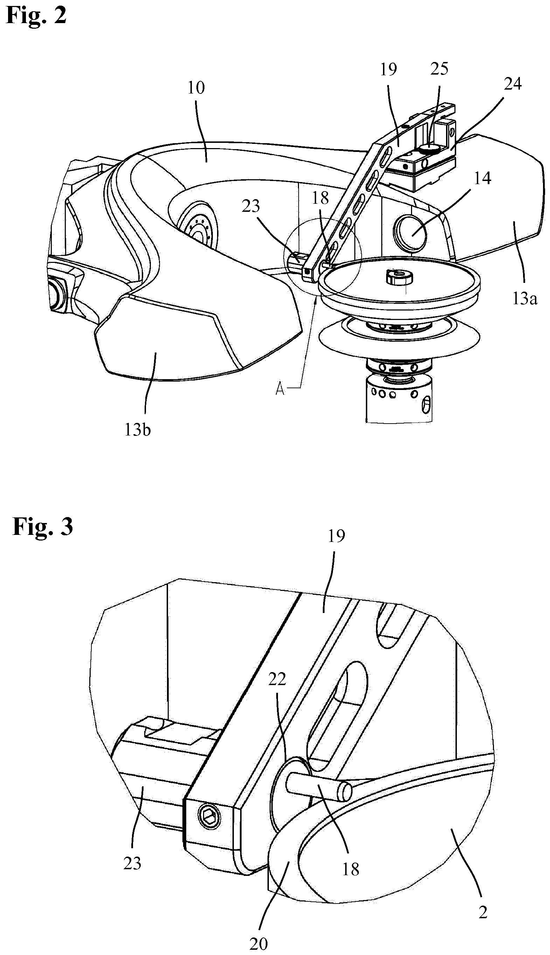

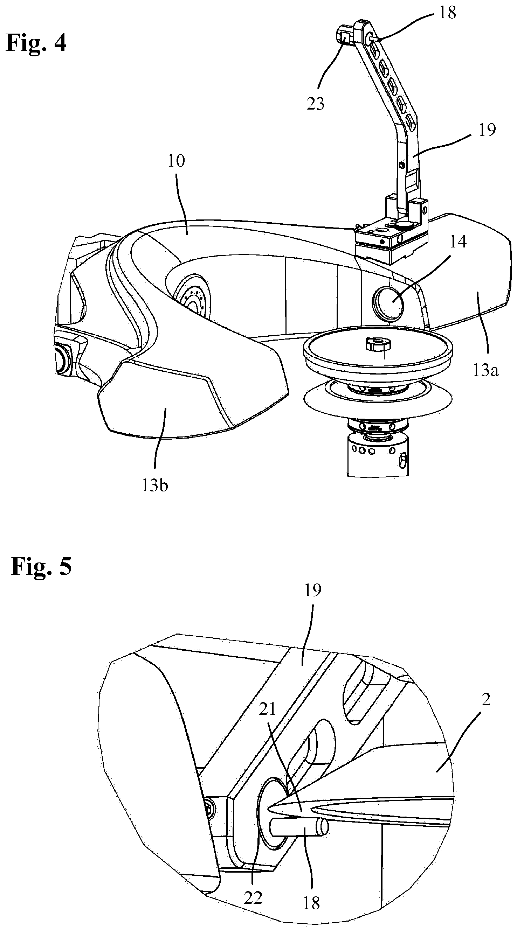

An dem Messelementträger 10 ist ein mit der Messeinrichtung zusammenwirkender Referenzkörper 18 zwischen einer in Figur 4 gezeigten Bereitschaftsstellung und einer in Figur 2 gezeigten Messstellung beweglich angeordnet. Bei der gezeigten Ausführung ist der Referenzkörper 18 als Zylinderstift mit einem Durchmesser von weniger als 10 mm ausgeführt. Der stiftförmige Referenzkörper 18 ist am freien Ende eines am Messelementträger 10 schwenkbar angelenkten Arms 19 angeordnet. Dadurch kann der stiftförmige Referenzkörper18 zwischen einer nach oben geklappten Bereitschaftsstellung und einer nach unten geklappten Messstellung bewegt werden. Der Arm 19 könnte aber auch zur Seite wegklappbar oder verschiebbar sein. In der gezeigten Ausführung ist der Arm 19 derart ausgeführt, dass der Referenzkörper 18 gemäß Figur 3 nicht nur auf eine obere Fläche 20 des Werkzeugs 2 aufgelegt, sondern gemäß Figur 5 auch von unten an eine untere Fläche 21 des Werkzeugs 2 angelegt werden kann. In einer bevorzugten Ausführungsform wird der Arm 19 in der oberen Bereitschaftsstellung durch einen Haltemechanismus festgehalten, beispielsweise einer Rastvorrichtung oder einen Magneten.

Die Länge des Armes 19 ist so bemessen, dass die Mittelachse des Referenzkörpers 18 in nach unten geklappter Position die Mittelachse 4 des Werkzeuges 2 schneidet.

Der Referenzkörper 18 ist vorzugweise so im Arm 19 befestigt, dass er ohne größeren Aufwand zwischen einer oberen und einer unteren Rastposition verortet werden kann. Dies wird am einfachsten dadurch verwirklicht, dass der Referenzkörper 18 exzentrisch in einer Aufnahmeöffnung 22 des Arms 19 angebracht ist. Über die Drehung eines Griffstücks 23, das aus der dem Werkzeug abgewandten Seite des Arms 19 aus diesem herausragt, kann zwischen den beiden Rastpositionen hin und her gewechselt werden. Die Drehachse des Griffstücks 23 ist dabei idealerweise so eingerichtet, dass sie entlang einer Mantellinie des Referenzkörpers 18 verläuft. Damit wird erreicht, dass der Arm 19 bei Antastung nach unten und nach oben stets in der gleichen Auslenkstellung zu liegen kommt. Alternativ kann die Verstellung des Referenzkörpers 18 auch mittels einer Linearführung oder einem Schwenkmechanismus oder dgl. erfolgen.

Wie aus Figur 2 hervorgeht, ist der Arm 19 an seiner dem Referenzkörper 18 abgewandten Seite in einer Haltevorrichtung 24 gelagert, die es erlaubt eine vom Messelementträger 10 gesonderte Feinjustierung vorzunehmen. Die Feinjustierung dient dazu, die Mittelachse des Referenzkörpers 20 parallel zur zweiten Achse 11 auszurichten. Vorzugweise weist die Haltevorrichtung 24 hierzu eine z.B. als Stellrad ausgeführte Einstelleinrichtung 25 auf. Durch die Drehung des Stellrads kann der obere Teil der Haltevorrichtung 24 zum unteren Teil der Haltevorrichtung 24 um eine Achse geschwenkt werden, die im Wesentlichen senkrecht sowohl zur ersten Achse 8 als auch zur zweiten Achse 11 steht.

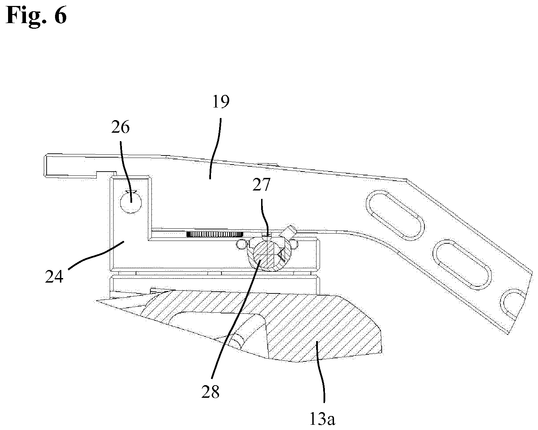

Zusätzlich kann der an der Haltevorrichtung 24 um eine Achse 26 schwenkbar angeordnete Arm 19 eine in Figur 6 erkennbare Federung 27 aufweisen, die mit einer in der Haltevorrichtung 24 verbauten Stellvorrichtung 28 zusammenwirkt. In einer möglichen Ausführungsform ist die Stellvorrichtung 28 als Hebel mit einem quer zur Rotationsachse verlaufenden Stift ausgebildet. Der Stift ist dabei in seinem Außenumfang nicht voll zylindrisch, sondern weist eine abgeflachte Seite auf. In einer ersten Position ist der Hebel so gestellt, dass der Stift mit seiner zylindrischen Fläche nach oben zeigt. Dadurch kommt die Federung 27 auf der Oberfläche des Stifts zu Auflage. Dies bewirkt, dass der Arm 19 unter Vorspannung gegen Kräfte gesetzt wird die nach unten parallel zur Rotationsachse wirken. Dies erweist sich vor allem dann als zweckmäßig, wenn der Referenzkörper 18 von unten an das Messobjekt herangeführt wird und somit nicht durch sein Eigengewicht zur Anlage kommt. In einer zweiten Position ist der Hebel so gestellt, dass die flache Seite in Richtung der Federung 27 zeigt. Die Federung 27 ist dabei so dimensioniert, dass sie nicht zur Anlage an diese Seite des Stiftes kommt.

In einer Alternativen Ausführungsform kann der Arm 19 sowohl nach unten als auch nach oben federnd gelagert sein, so dass der Arm 19 und somit auch der Referenzkörper 18 stets unter einer gewissen Vorspannung stehen, wenn der Referenzkörper 18 auf der Oberfläche des Werkzeuges 2 aufliegt. Dadurch kann eine stete Anlage des Referenzkörpers 18 an der Oberfläche des Werkzeuges 2 sichergestellt werden.

Es versteht sich von selbst, dass die Position des Arms 19 und die der Haltevorrichtung 24 nicht auf den in den in den Figuren dargestellten Orten beschränkt ist, sondern, dass der Arm 19 und die Haltevorrichtung 24 an verschiedenen Flächen des Messelementträgers 10 befestigt sein können. Beispielsweise ist auch eine Befestigung an den den Zwischenraum 16 begrenzenden Flächen des Messelementträgers 10 möglich, insbesondere in der Mitte des U-förmigen Bereichs zwischen den umgreifenden Armen 13a und 13b.

### Bezugszeichenliste

- 1: Einstell- und /oder Messvorrichtung
- 2: Werkzeug
- 3: Gestell- oder Unterteil
- 4: Mittelachse
- 5: Aufnahme
- 6: Werkzeughalter
- 7: Ständer
- 8: Erste Achse
- 9: Führung
- 10: Messelementträger
- 11: Zweite Achse
- 12: Handgriff
- 13a: Erster Arm
- 13b: Zweiter Arm
- 14: Erstes Messelement
- 15: Zweites Messelement
- 16: Zwischenraum
- 17: Werkzeugreservoir
- 18: Referenzkörper
- 19: Arm
- 20: Obere Fläche
- 21: Untere Fläche
- 22: Aufnahmeöffnung
- 23: Griffstück
- 24: Haltevorrichtung
- 25: Einstelleinrichtung
- 26: Achse
- 27: Federung
- 28: Stellvorrichtung

## Patentansprüche

1. Vorrichtung (1) zur Einstellung und/oder Vermessung eines Werkzeugs (2) mit einem Gestell bzw. Unterteil (3), einer an dem Gestell bzw. Unterteil (3) angeordneten, um eine Mittelachse (4) drehbaren Aufnahme (5) zur Halterung des Werkzeugs (2) und einem in einer ersten Achse (8) und einer zur ersten Achse (8) rechtwinkligen zweiten Achse (11) beweglichen Messelementträger (10) sowie eine Messeinrichtung (14, 15) zur optischen Vermessung des Werkzeugs (2), welche an dem Messelementträger (10) angeordnet ist, und einem Referenzkörper (18), wobei dem Messelementträger (10) der zwischen einer Bereitschaftsstellung und einer Messstellung am Werkzeug (2) bewegliche Referenzkörper (18) zur Zusammenwirkung mit der Messeinrichtung (14, 15) bei einer Positionsbestimmung des Werkzeugs durch eine Messoptik der Messeinrichtung (14, 15) zugeordnet ist, wobei der Referenzkörper (18) am Messelementträger (10) beweglich angeordnet ist und der Referenzkörper (18) einem Lichtstrahl eine klar definierte und ausgeprägte Kante bietet, welche bei der Positionsbestimmung des Werkzeugs durch eine Messoptik fokussierbar ist, **gekennzeichnet durch** einen schwenk- oder verschiebbaren Arm (19), an welchem der Referenzkörper (18) gelenkig befestigt ist.

2. Vorrichtung zur Einstellung und/oder Vermessung nach Anspruch 1, **dadurch gekennzeichnet, dass** der Referenzkörper (18) am freien Ende des Arms (19) angeordnet ist.

3. Vorrichtung zur Einstellung und/oder Vermessung nach Anspruch 2, **dadurch gekennzeichnet, dass** der Arm (19) am Messelementträger (10) schwenkbar angelenkt ist.

4. Vorrichtung zur Einstellung und/oder Vermessung nach Anspruch 2 oder 3, **dadurch gekennzeichnet, dass** der Arm (19) über eine Haltevorrichtung (24) schwenkbar am Messelementträger (10) angeordnet ist.

5. Vorrichtung zur Einstellung und/oder Vermessung nach Anspruch 4, **dadurch gekennzeichnet, dass** die Haltevorrichtung (24) durch eine Einstelleinrichtung (25) justierbar ist.

6. Vorrichtung zur Einstellung und/oder Vermessung nach einem der Ansprüche 2 bis 5, **dadurch gekennzeichnet, dass** der Arm (19) eine Federung (27) enthält.

7. Vorrichtung zur Einstellung und/oder Vermessung nach Anspruch 6, **dadurch gekennzeichnet, dass** die Federung (27) mit einer im Arm (19) angeordneten Stellvorrichtung (28) zusammenwirkt.

8. Vorrichtung zur Einstellung und/oder Vermessung nach einem der Ansprüche 2 bis 7, **dadurch gekennzeichnet, dass** der Referenzkörper (18) exzentrisch in einer Aufnahmeöffnung (22) an dem Arm (19) gelagert ist.

9. Vorrichtung zur Einstellung und/oder Vermessung nach Anspruch 8, **dadurch gekennzeichnet, dass** der Referenzkörper (18) durch ein Griffstück (23) verstellbar an dem Arm (19) angeordnet ist.

10. Vorrichtung zur Einstellung und/oder Vermessung nach mindestens einem der voranstehenden Ansprüche, **dadurch gekennzeichnet, dass** der Referenzkörper (18) ein Zylinderstift mit einem Durchmesser von weniger als 10 mm ist.

11. Verfahren zum Vermessen eines Werkzeugs unter Verwendung einer Vorrichtung nach mindestens einem der voranstehenden Ansprüche, **bei dem** der Referenzkörper (18) in eine Messstellung am Werkzeug (2) bewegt wird, wobei der Referenzkörper (18) einem Lichtstrahl eine klar definierte und ausgeprägte Kante bietet, welche bei der Positionsbestimmung des Werkzeugs durch die Messoptik fokussiert wird.

## Claims

1. Device (1) for setting and/or measuring a tool (2), comprising a frame or lower part (3), a holder (5), which is arranged on the frame or lower part (3), is rotatable about a centre axis (4) and is intended for holding the tool (2), and a measuring element carrier (10), which is movable in a first axis (8) and a second axis (11) that extends at right angles to the first axis (8), and also a measuring element (14, 15), which is intended for optical measurement of the tool (2) and is arranged on the measuring element carrier (10), and a reference body (18), wherein the measuring element carrier (10) is assigned the reference body (18), which is movable between a standby position and a measuring position on the tool (2), for interaction with the measuring element (14, 15) in a positional determination of the tool by a measuring optical unit of the measuring element (14, 15), wherein the reference body (18) is movably arranged on the measuring element carrier (10) and the reference body (18) offers a light beam a clearly defined and distinct edge, which can be focused by a measuring optical unit during the positional determination of the tool, **characterized by** a pivotable or displaceable arm (19), on which the reference body (18) is fastened in an articulated manner.

2. Setting and/or measuring device according to Claim 1, **characterized in that** the reference body (18) is arranged at the free end of the arm (19).

3. Setting and/or measuring device according to Claim 2, **characterized in that** the arm (19) is pivotably articulated on the measuring element carrier (10).

4. Setting and/or measuring device according to Claim 2 or 3, **characterized in that** the arm (19) is pivotably arranged on the measuring element carrier (10) by way of a holding device (24).

5. Setting and/or measuring device according to Claim 4, **characterized in that** the holding device (24) is adjustable by a setting element (25).

6. Setting and/or measuring device according to one of Claims 2 to 5, **characterized in that** the arm (19) contains a spring mechanism (27).

7. Setting and/or measuring device according to Claim 6, **characterized in that** the spring mechanism (27) interacts with an adjusting device (28) arranged in the arm (19).

8. Setting and/or measuring device according to one of Claims 2 to 7, **characterized in that** the reference body (18) is mounted eccentrically in a receiving opening (22) on the arm (19).

9. Setting and/or measuring device according to Claim 8, **characterized in that** the reference body (18) is arranged on the arm (19) such that it can be adjusted by a grip (23).

10. Setting and/or measuring device according to at least one of the preceding claims, **characterized in that** the reference body (18) is a cylindrical pin with a diameter of less than 10 mm.

11. Method for measuring a tool by using a device according to at least one of the preceding claims, **in which** the reference body (18) is moved into a measuring position on the tool (2), wherein the reference body (18) offers a light beam a clearly defined and distinct edge, which is focused by a measuring optical unit during the positional determination of the tool.

## Revendications

1. Dispositif (1) pour le réglage et/ou la mesure d'un outil (2), comprenant un bâti ou une partie inférieure (3), un logement (5) disposé sur le bâti ou la partie inférieure (3) et apte à tourner autour d'un axe central (4) pour maintenir l'outil (2), et un support (10) d'élément de mesure mobile selon un premier axe (8) et un deuxième axe (11) perpendiculaire au premier axe (8), ainsi qu'un dispositif de mesure (14, 15) pour la mesure optique de l'outil (2), qui est disposé sur le support (10) d'élément de mesure, et un corps de référence (18), le corps de référence (18), mobile sur l'outil (2) entre une position d'attente et une position de mesure, étant associé au support (10) d'élément de mesure pour coopérer avec le dispositif de mesure (14, 15) lors d'une détermination de la position de l'outil par une optique de mesure du dispositif de mesure (14, 15), le corps de référence (18) étant disposé de manière mobile sur le support (10) d'élément de mesure et le corps de référence (18) offrant à un rayon lumineux une arête clairement définie et prononcée qui est apte à être focalisée par une optique de mesure lors de la détermination de la position de l'outil, **caractérisé par** un bras (19) pivotant ou coulissant sur lequel le corps de référence (18) est fixé de manière articulée.

2. Dispositif de réglage et/ou de mesure selon la revendication 1, **caractérisé en ce que** le corps de référence (18) est disposé à l'extrémité libre du bras (19) .

3. Dispositif de réglage et/ou de mesure selon la revendication 2, **caractérisé en ce que** le bras (19) est articulé de manière pivotante sur le support (10) d'élément de mesure.

4. Dispositif de réglage et/ou de mesure selon la revendication 2 ou 3, **caractérisé en ce que** le bras (19) est agencé de manière pivotante sur le support (10) d'élément de mesure par l'intermédiaire d'un dispositif de maintien (24).

5. Dispositif de réglage et/ou de mesure selon la revendication 4, **caractérisé en ce que** le dispositif de maintien (24) est apte à être ajusté au moyen d'un dispositif de réglage (25).

6. Dispositif de réglage et/ou de mesure selon l'une des revendications 2 à 5, **caractérisé en ce que** le bras (19) comporte une suspension (27).

7. Dispositif de réglage et/ou de mesure selon la revendication 6, **caractérisé en ce que** la suspension (27) coopère avec un dispositif de réglage (28) disposé dans le bras (19).

8. Dispositif de réglage et/ou de mesure selon l'une des revendications 2 à 7, **caractérisé en ce que** le corps de référence (18) est monté de manière excentrée dans un orifice de réception (22) sur le bras (19).

9. Dispositif de réglage et/ou de mesure selon la revendication 8, **caractérisé en ce que** le corps de référence (18) est agencé de manière réglable sur le bras (19) par une pièce de préhension (23).

10. Dispositif de réglage et/ou de mesure selon au moins l'une des revendications précédentes, **caractérisé en ce que** le corps de référence (18) est une tige cylindrique de diamètre inférieur à 10 mm.

11. Procédé de mesure d'un outil utilisant un dispositif selon au moins l'une des revendications précédentes, dans lequel le corps de référence (18) est déplacé dans une position de mesure sur l'outil (2), le corps de référence (18) offrant à un faisceau lumineux une arête clairement définie et prononcée, qui est focalisée par l'optique de mesure lors de la détermination de la position de l'outil.
